# EUROPEAN PATENT APPLICATION

(11) **EP 4 567 924 A1**
(43) Date of publication of application: **11.06.2025**
(21) Application number: 24202265.5
(22) Date of filing: 24.09.2024
(51) Int. Cl.: H01M 4/36, C01G 53/504, H01M 4/525, H01M 10/0525, H01M 4/02

(54) **POSITIVE ELECTRODE ACTIVE MATERIAL AND RECHARGEABLE LITHIUM BATTERY INCLUDING THE SAME**

(30) Priority: 08.12.2023 KR 20230177463
(71) Applicant: SAMSUNG SDI CO., LTD., Giheung-gu Yongin-si, Gyeonggi-do 17084 (KR)
(72) Inventor: JANG, Jungsue, Yongin-si (KR)
(74) Representative: Marks & Clerk LLP

(57) **Abstract**

A rechargeable lithium battery includes a positive electrode active material. The positive electrode active material comprises a first particle that includes a first lithium composite oxide and has a first average particle diameter, and a second particle that includes a second lithium composite oxide and has a second average particle diameter greater than the first average particle diameter. The first particle includes yttrium (Y) and zirconium (Zr) on a surface of the first particle. The yttrium (Y) on the surface of the first particle has a first composition. Yttrium (Y) on a surface of the second particle has a second composition. A ratio of the first composition to the second composition is greater than about 100.

## Description

### BACKGROUND

### 1. Field

Embodiments of the present disclosure described herein are related to a positive electrode active material, a method of fabricating the positive electrode active material, a positive electrode including the positive electrode active material, and a rechargeable lithium battery including the positive electrode.

### 2. Description of the Related Art

A battery, which generates an electric energy through physical or chemical reactions to supply the generated electric energy to the outside, is utilized if (e.g., when) no AC (alternating current) power is available to supply to buildings or if (e.g., when) DC (direct current) power is desired or required in accordance with the living or usage environment surrounded by or of the one or more suitable electric and/or electronic devices.

Among such batteries, a primary battery and a secondary battery that uses a chemical reaction are generally utilized. The primary (e.g., non-rechargeable) battery is a consumable battery collectively referred to as a dry battery. In contrast, the secondary (e.g., rechargeable) battery is a rechargeable battery in which oxidation and reduction reactions are repeated at positive and negative electrodes.

Lithium composite oxide containing a relatively high amount of nickel has attracted considerable attention as a positive electrode active material of rechargeable lithium batteries. The positive electrode active material has an advantage of relatively high energy density. The interest in relatively high capacity rechargeable lithium batteries may induce, cause, or encourage the use of bimodal-type or kind positive electrode active materials that include a mixture of small particles and large particles having different average particle diameters from each other.

### SUMMARY

Aspects according to one or more embodiments are directed toward a positive electrode active material having relatively high ion conductivity for a rechargeable lithium battery.

Aspects according to one or more embodiments are directed toward a rechargeable lithium battery with increased stability and capacity retention properties.

Additional aspects will be set forth in part in the description which follows and, in part, will be apparent from the description, or may be learned by practice of the presented embodiments of the present disclosure.

According to one or more embodiments of disclosure, a positive electrode active material includes: a first particle that (e.g., first particles that each) includes a first lithium composite oxide and has a first average particle diameter; and a second particle that (e.g., second particles that each) includes a second lithium composite oxide and has a second average particle diameter greater than the first average particle diameter. The first particle includes yttrium (Y) and zirconium (Zr) on a surface of the first particle. The yttrium (Y) on the surface of the first particle has a first composition. Yttrium (Y) on a surface of the second particle has a second composition. A ratio of the first composition to the second composition may be greater than about 100.

According to one or more embodiments of disclosure, a method of fabricating a positive electrode active material includes: synthesizing a first particle that (e.g., first particles that each) includes a first lithium composite oxide and has a first average particle diameter; synthesizing a second particle that (e.g., second particles that each) includes a second lithium composite oxide and has a second average particle diameter greater than the first average particle diameter; and mixing the first particle and the second particle with each other. The (e.g., act or task) step of synthesizing the first particle includes: preparing a precursor of the first particle; and firing the precursor together with a flux. The flux includes yttrium (Y) and zirconium (Zr).

According to one or more embodiments of disclosure, a positive electrode for a rechargeable lithium battery may include the positive electrode active material discussed herein.

According to one or more embodiments of disclosure, a rechargeable lithium battery may include the positive electrode discussed herein.

At least some of the above and other features of the invention are set out in the claims.

### BRIEF DESCRIPTION OF DRAWINGS

FIG. 1 illustrates a simplified conceptual diagram showing a rechargeable lithium battery according to one or more embodiments of present disclosure.
FIG. 2 illustrates a diagram showing a positive electrode active material according to one or more embodiments of present disclosure.
FIG. 3 illustrates a flow chart showing a method of fabricating a positive electrode active material according to one or more embodiments of present disclosure.
FIGS. 4-6 illustrate simplified diagrams showing a method of fabricating a positive electrode active material of FIG. 3.
FIG. 7 illustrates a perspective view showing a rechargeable lithium battery according to one or more embodiments of present disclosure.
FIGS. 8A and 8B illustrate diagrams showing results of SEM-EDS analysis on a first particle of Embodiment 1.
FIGS. 9A and 9B illustrate diagrams showing results of SEM-EDS analysis on a second particle of Embodiment 1.

### DETAILED DESCRIPTION OF EMBODIMENTS

In order to sufficiently understand the configuration and effect of the present disclosure, one or more embodiments of the present disclosure will be described with reference to the accompanying drawings. It should be noted, however, that the present disclosure is not limited to the following example embodiments, and may be implemented in one or more suitable forms. Rather, the example embodiments are provided only to disclose the present disclosure and let those skilled in the art fully know the scope of the present disclosure.

In this description, it will be understood that, if (e.g., when) an element is referred to as being on another element, the element can be directly on the other element or intervening elements may be present between therebetween. In the drawings, thicknesses of some components are exaggerated for effectively explaining the technical contents. Like reference numerals refer to like elements throughout, and duplicative descriptions thereof may not be provided in the specification.

Some embodiments detailed in this description will be discussed with reference to sectional and/or plan views as example views of the present disclosure. In the drawings, thicknesses of layers and regions are exaggerated for effectively explaining the technical contents. Accordingly, regions illustrated in the drawings have general properties, and shapes of regions illustrated in the drawings are utilized to disclose specific shapes but not limited to the scope of the present disclosure. It will be understood that, although the terms "first", "second", "third", and/or the like may be utilized herein to describe one or more suitable elements, these elements should not be limited by these terms. These terms are only utilized to distinguish one element from another element. The one or more embodiments explained and illustrated herein include complementary embodiments thereof.

The terminology utilized herein is for the purpose of describing particular embodiments only and is not intended to limit the present disclosure. As utilized herein, the singular forms are intended to include the plural forms as well. The terms 'comprises/includes' and/or 'comprising/including' utilized in the specification do not exclude the presence or addition of one or more other components.

Herein, it should be understood that terms such as "comprises," "includes," or "have" are intended to designate the presence of an embodied aspect, number, operation, element, and/or a (e.g., any suitable) combination thereof, but it does not preclude the possibility of the presence or addition of one or more other features, numbers, operations, elements, and/or a (e.g., any suitable) combination thereof.

As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

In the drawings, the thickness of layers, films, panels, regions, and/or the like, are exaggerated for clarity and like reference numerals designate like elements throughout, and duplicative descriptions thereof may not be provided the specification. It will be understood that if (e.g., when) an element such as a layer, film, region, or substrate is referred to as being "on" another element, it can be directly on the other element or intervening elements may also be present. In other examples, if (e.g., when) an element is referred to as being "directly on" another element, there are no intervening elements present.

In one or more embodiments, "layer" herein includes not only a shape formed on the whole surface if (e.g., when) viewed from a plan view, but also a shape formed on a partial surface.

"Group" refers to a group of the Periodic Table of Elements according to the International Union of Pure and Applied Chemistry ("IUPAC") Groups 1-18 grouping system.

Herein, "or" is not to be construed as an exclusive meaning, for example, "A or B" is construed to include A, B, A+B, and/or the like.

"Metal" is interpreted as a concept including ordinary metals, transition metals and metalloids (semi-metals).

As utilized herein, the term "substantially" and similar terms are utilized as terms of approximation and not as terms of degree, and are intended to account for the inherent deviations in measured or calculated values that would be recognized by those of ordinary skill in the art. Also, the term "about" and similar terms, when utilized herein in connection with a numerical value or a numerical range, are inclusive of the stated value and a value within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

Hereinafter, positive electrode active materials and rechargeable lithium batteries according to one or more example embodiments will be described in more detail.

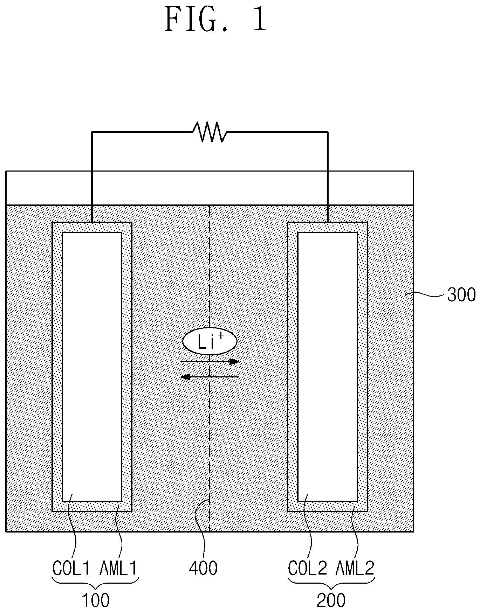

FIG. 1 illustrates a conceptual diagram showing a rechargeable lithium battery according to one or more embodiments of the present disclosure. Referring to FIG. 1, a rechargeable lithium battery may include a positive electrode 100, a negative electrode 200, an electrolyte 300, and a separator 400.

The positive electrode 100 and the negative electrode 200 may be spaced and/or apart (e.g., spaced apart or separated) from each other across the separator 400. The separator 400 may be arranged between the positive electrode 100 and the negative electrode 200. The positive electrode 100, the negative electrode 200, and the separator 400 may be in contact with the electrolyte 300. The positive electrode 100, the negative electrode 200, and the separator 400 may be impregnated in the electrolyte 300.

The electrolyte 300 may be a medium through which lithium ions are transmitted between the positive electrode 100 and the negative electrode 200. The lithium ions in the electrolyte 300 may pass through the separator 400 to move toward the positive electrode 100 or the negative electrode 200.

The positive electrode 100 may include a first current collector COL1 and a positive electrode active material layer AML1 on the first current collector COL1. The first current collector COL1 may include metal, such as one or more of aluminium, copper, copper plated with nickel, stainless steels, nickel, titanium, palladium, and aluminium-cadmium alloys. The first current collector COL1 may include a polymer substrate having the metal arranged (e.g., coated or deposited) on at least one surface of the polymer substrate. The first current collector COL1 may be shaped like a film, a sheet, a foil, a mesh, a net, a porous substance, a foam, or non-woven fabric.

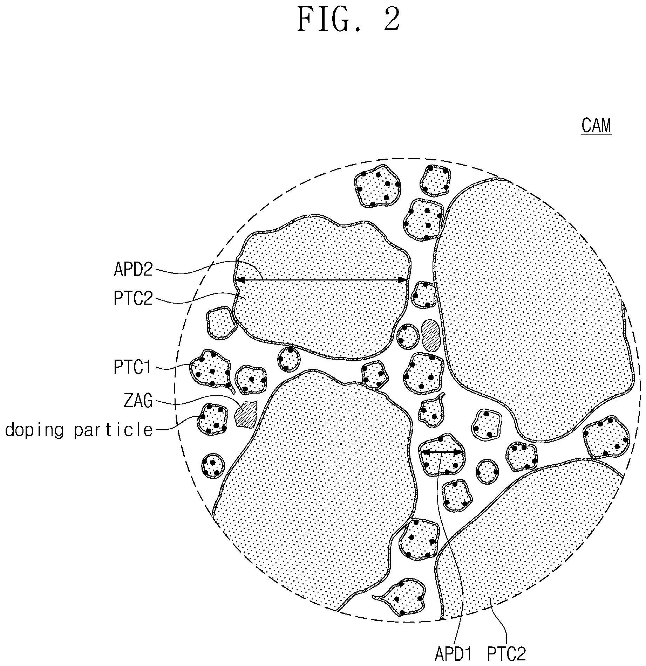

The positive electrode active material layer AML1 may include a binder, a conductive material, and a positive electrode active material. The positive electrode active material may have an amount of about 80 wt% to about 99 wt%, for example, about 85 wt% to about 98 wt%, based on the total weight of the positive electrode active material layer AML1. The positive electrode active material may be a source of lithium ions. The positive electrode active material may be a lithium transition metal oxide, which may include not only lithium but also at least one transition metal. The positive electrode active material according to one or more embodiments of the present disclosure will be described in more detail with reference to FIG. 2.

The conductive material may provide the positive electrode active material layer AML1 with conductivity. The conductive material may include at least one selected from among carbon-based materials (e.g., graphite, carbon black, acetylene black, Ketjen black, furnace black, lamp black, thermal black, and carbon fiber), metal powders, metal fibers, conductive whiskers, conductive metal oxides, conductive polymers, and a (e.g., any suitable) combination thereof. The conductive material may have an amount of about 1 wt% to about 30 wt% based on the total weight of the positive electrode active material layer AML1.

The binder may increase a bonding force between the positive electrode active material and the first current collector COL1. For example, the binder may include at least one selected from among polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, ethylene-propylene-diene monomer (EPDM), a sulfonated EPDM, styrene-butadiene rubber (SBR), fluorine rubber, and a (e.g., any suitable) combination thereof. The binder may have an amount of about 1 wt% to about 30 wt% based on the total weight of the positive electrode active material layer AML1.

The negative electrode 200 may include a second current collector COL2 and a negative electrode active material layer AML2 on the second current collector COL2. A description of the second current collector COL2 may be the same as or similar to that of the first current collector COL1. The second current collector COL2 may include metal the same as or different from that of the first current collector COL1. The second current collector COL2 may have a shape the same as or different from that of the first current collector COL1.

The negative electrode active material layer AML2 may include a binder, conductive material, and a negative electrode active material. The binder and the conductive material may be the same as that discussed above in the positive electrode active material layer AML1. The negative electrode active material may have an amount of about 80 wt% to about 99 wt%, for example, about 85 wt% to about 98 wt%, based on the total weight of the negative electrode active material layer AML2. The negative electrode active material may include at least one selected from among carbonaceous materials, lithium metal, lithium metal compounds, silicon, silicon compounds, tin, or tin compounds. Metal oxide, such as TiO₂ or SnO₂, whose electrical potential is less than about 2 V may also be utilized as the negative electrode active material. The carbonaceous material may include one or more of low-crystalline carbon and high-crystalline carbon.

The separator 400 may include a porous polymer film formed of a polyolefin-based polymer such as an ethylene homopolymer, a propylene homopolymer, an ethylene-butene copolymer, an ethylene-hexene copolymer, and an ethylene-methacrylate copolymer. The separator 400 may include a single substance of a porous polymer film or a stack substance of a plurality of porous polymer films. In one or more embodiments of the present disclosure, the separator 400 may include an ordinary porous non-woven fabric, such as a high-melting-point glass fiber or a polyethylene terephthalate fiber.

The electrolyte 300 may include a salt having a structure of A⁺B⁻. The A⁺ may include at least one alkali metal cation selected from among Li⁺, Na⁺, and K⁺. The B⁻ may include at least one anion selected from among F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN-, and (CF₃CF₂SO₂)₂N⁻.

In one or more embodiments of the present disclosure, the electrolyte 300 may be utilized by dissolving a salt in an organic solvent. The organic solvent may include propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, or any mixture thereof.

A casing commonly utilized in the art may be adopted as a casing of a rechargeable lithium battery according to one or more embodiments of the present disclosure, and there may be no limitation on external appearance in accordance with the use of batteries. For example, the casing of rechargeable lithium batteries may have a cylindrical shape, a prismatic shape, a pouch shape, or a coin shape.

FIG. 2 illustrates a diagram showing a positive electrode active material according to one or more embodiments of the present disclosure. Referring to FIG. 2, a positive electrode active material CAM may include (e.g., may be provided in the form of) powder before being utilized in the positive electrode active material layer AML1 discussed above with reference to FIG. 1. The positive electrode active material CAM may include a plurality of first particles PTC1, a plurality of second particles PTC2, and a plurality of agglomerates ZAG.

The first particle PTC1 (e.g., first particles) has a first average particle diameter APD1, and the second particle PTC2 (e.g., second particles) has a second average particle diameter APD2. The first average particle diameter APD1 is less than the second average particle diameter APD2. For example, the first average particle diameter APD1 may be in a range from about 1 µm to about 5 µm. The second average particle diameter APD2 may be in a range from about 10 µm to about 25 µm. A term "average particle diameter", or D50, utilized in the present disclosure may refer to a particle diameter if (e.g., when) a volume accumulation percentage corresponds to about 50% in a particle diameter distribution obtained from a volume of particles. The average particle diameter may be measured by any suitable method utilized in the art, and for example, may be evaluated by a particle size analyzer, a transmission electron microscopic image, or scanning electron microscopic image. In one or more embodiments, an average particle diameter value may be obtained by utilizing a dynamic light scattering method, performing data analysis to count the number of particles for each particle size range, and calculating the average particle diameter from the result. Unless otherwise defined, the average particle diameter may refer to a diameter (D50) of particles having a cumulative volume of about 50 vol% in particle size distribution. In one or more embodiments, a particle diameter distribution may be obtained by measuring sizes (e.g., diameters or major axis lengths) of about twelve particles randomly selected from among a transmission electron microscopic image, and then a diameter (D50) of particles whose cumulative volume is 50 vol% in the particle diameter distribution may be referred to as the average particle diameter unless otherwise specified. In the present disclosure, the first particle PTC1 may be called a small particle, and the second particle PTC2 may be called a large particle.

The first and second particles PTC1 and PTC2 may have a granular shape or a spherical shape.

In one or more embodiments of present disclosure, the first particle PTC1 may be shaped like a single particle (e.g., each of the first particles is a single or monolithic particle). In this description, the term "single particle" may refer to one single particle that is present alone without a grain boundary therein (e.g., inside the one single particle), and is a monolithic structure in which particles are not aggregated (e.g., not agglomerated) together with one another but present as an independent phase in terms of morphology, and thus may be expressed as a single crystal particle (e.g., the single particle is not in the form of a secondary particle). In one or more embodiments, the single particle may be a particle containing several crystals. The single particle may be provided as a single isolated form, or may be present in which less than 10 single particles are adhered to each other. The second particle PTC2 may (e.g., the second particles may each) be shaped like or formed as a secondary particle in which primary particles are aggregated (e.g., agglomerated) (e.g., the secondary particle is not in the form of a single particle).

The positive electrode active material CAM according to one or more embodiments of present disclosure may have a bimodal shape including small particles (e.g., PTC1) and large particles (e.g., PTC2) having different average particle diameters. The small particles may fill pores between the large particles, and thus the positive electrode active material CAM may have an increased integration density. For example, the positive electrode active material CAM according to one or more embodiments of present disclosure may have a high energy density per unit volume.

In one or more embodiments, the first particle PTC1 and the second particle PTC2 in the positive electrode active material CAM may have a weight ratio of about 95:5 to about 50:50. In one or more embodiments, the first particle PTC1 and the second particle PTC2 in the positive electrode active material CAM may have a weight ratio of about 5:95 to about 50:50. For example, in the positive electrode active material CAM, a weight of the second particle PTC2 may be greater than that of the first particle PTC1. The first particle includes a first lithium composite oxide and the second particle includes a second lithium composite oxide. Each of first and second lithium composite oxides may include nickel (Ni). Each of the first and second lithium composite oxides may further include at least one metal selected from among cobalt (Co), manganese (Mn), and aluminium (Al).

For example, the first lithium composite oxide may be represented by Chemical Formula 1.

[Chemical Formula 1] Liₐ₁Niₓ₁Ma₁₋ₓ₁Zr_{w1}Y_{c1}O_{b1}

In Chemical Formula 1, subscript "a1" may range from about 0.5 to about 1.5, subscript "x1" may range from about 0.6 to about 0.99, subscript "b1" may range from about 1.8 to about 2.2, subscript "1-x1" may range from 0.01 to about 0.4, subscript "w1" may range from about 0.0005 to about 0.003, and subscript "c1" may range from about 0.00002 to about 0.0003 (0.00002≤c1≤0.0003). Symbol Ma may include at least one element selected from among Co, Al, Mn, Na, Mg, Ca, Y, Ti, Hf, V, Nb, Ta, Cr, Mo, W, Fe, Cu, Ag, Zn, B, Ga, C, Si, and Sn. In one or more embodiments, symbol Ma may include Co, Al, and Mn.

The second lithium composite oxide may be represented by Chemical Formula 2.

[Chemical Formula 2] Liₐ₂Niₓ₂Mb₁₋ₓ₂O_{b2}

In Chemical Formula 2, subscript "a2" may range from about 0.5 to about 1.5, subscript "x2" may range from about 0.6 to about 0.99, subscript "b2" may range from about 1.8 to about 2.2, and subscript "1-x2" may range from 0.01 to about 0.4. Symbol Mb may include at least one element selected from among Co, Al, Mn, Na, Mg, Ca, Y, Ti, Hf, V, Nb, Ta, Cr, Mo, W, Fe, Cu, Ag, Zn, B, Ga, C, Si, Zr, and Sn. In one or more embodiments, symbol Mb may include Co, Al, and Mn. In the present disclosure, transition metal may include a post-transition metal such as Al.

For example, the second lithium composite oxide may be expressed by Chemical Formula 2-1.

[Chemical Formula 2-1] Liₐ₂Niₓ₂Zr_{w2}Mb_{1-x2-w2}O_{b2}

In Chemical Formula 2-1, subscript "a2" may range from about 0.5 to about 1.5, subscript "x2" may range from about 0.6 to about 0.99, subscript "b2" may range from about 1.8 to about 2.2, subscript "w2" may range from about 0.001 to about 0.4, and subscript "1-x2-w2" may range from 0.009 to about 0.399. Symbol Mb may include at least one element selected from among Co, Al, Mn, Na, Mg, Ca, Y, Ti, Hf, V, Nb, Ta, Cr, Mo, W, Fe, Cu, Ag, Zn, B, Ga, C, Si, and Sn. In one or more embodiments, symbol Mb may include Co, Al, and Mn. In the present disclosure, transition metal may in include a post-transition metal such as Al.

A symbol Mb of the second lithium composite oxide and a ratio of elements included in the Mb may be different from a symbol Ma of the first lithium composite oxide and a ratio of elements included in Ma. For example, symbol Mb of the second lithium composite oxide may include Co and Al, and symbol Ma of the first lithium composite oxide may include Co and Mn. For another example, each of symbols Ma and Mb may include Co, Al, and Mn. A composition ratio of Al of symbol Ma may be greater than a composition ratio of Al of symbol Mb, and a composition ratio of Mn of symbol Ma may be less than a composition ratio of Mn of symbol Mb.

As disclosed in FIG. 2, the first particle PTC1 may include doping particles on a surface thereof. The doping particles may include yttrium (Y) and zirconium (Zr). For example, the first particle PTC1 according to the present disclosure includes yttrium (Y) and zirconium (Zr) on a surface thereof. The yttrium (Y) and zirconium (Zr) included on the surface of the first particle PTC1 are originated from a flux which will be discussed in more detail. In one or more embodiments of the present disclosure, the flux may be yttria-stabilized zirconia (YSZ).

A term "composition of yttrium (Y)" or "composition of zirconium (Zr)" utilized in this description may be obtained from a result of analysis on elements of a surface of the positive electrode active material CAM by utilizing energy dispersive spectroscopy (EDX) or scanning electron microscope energy dispersive spectroscopy (SEM-EDS). Elements on a surface of the positive electrode active material CAM collided with an electron beam may be configured to emit a characteristic X-ray. The emitted X-ray may be analyzed through an EDX detector to ascertain a kind and an amount of a corresponding element.

The term "composition" utilized in in the present disclosure may refer to an amount of element included in a specific compound. The term "composition ratio" utilized in the present disclosure may indicate a ratio of elements included in a specific compound.

Yttrium (Y) on a surface of the first particle PTC1 has a first composition, and yttrium (Y) on a surface of the second particle PTC2 has a second composition.

According to a subsequently described method of fabricating a positive electrode active material, a small amount of yttrium (Y) on the surface of the second particle PTC2 may be detected by a process in which the first particle PTC1 and the second particle PTC2 are mixed with each other. According to the present disclosure, a mixing process may cause existence of an extremely small amount of yttrium (Y) present on the surface of the second particle PTC2 (e.g., the surface is yttrium-free), and it may thus be seen that yttrium (Y) is not (or substantially not) provided (e.g., is substantially yttrium free) on the surface of the second particle PTC2 (e.g., the surface is free of yttrium).

In the present disclosure, a ratio of the first composition to the second composition is greater than about 100. For example, a ratio of the first composition to the second composition may range from about 100 to about 100,000. There may be no upper limit of the ratio of the first composition to the second composition. In the present disclosure, a composition of yttrium (Y) present on a surface of a small particle may be much greater than a composition of yttrium (Y) present on a surface of a large particle.

The surface of the first particle PTC1 may have a composition ratio (Y/Zr) of yttrium to zirconium. The composition ratio (Y/Zr) may range from about 0.5 to about 20. In one or more embodiments, the doping particles on the surface of the first particle PTC1 may have the composition ratio (Y/Zr).

When the composition ratio (Y/Zr) has the range discussed above, ion conductivity of a rechargeable lithium battery may be effectively improved.

In one or more embodiments of disclosure, the subscript "x1" or a mole ratio of Ni in Chemical Formula 1 may be greater than about 0.8. When the first lithium composite oxide has a composition having a high composition of Ni (x1>0.8), the first lithium composite oxide may be fired at a low temperature. Therefore, the first particle PTC1 may be synthesized at a low temperature in a subsequently described method of fabricating a positive electrode active material for a rechargeable lithium battery. Ni in the first lithium composite oxide may affect power and capacity of a rechargeable lithium battery. In the present disclosure, the first lithium composite oxide having a high composition of nickel may be utilized to provide a high-power rechargeable lithium battery. The subscript "x2" or a mole ratio of Ni in Chemical Formula 2 may also be greater than about 0.8. However, the subscript "x2" may be different from the subscript "x1".

An increase in an amount of Ni in the first and second lithium composite oxides may induce a reduction in stability of a positive electrode or a rechargeable battery. In one or more embodiments of the present disclosure, the first and second lithium composite oxide may further include Co, and thus a rechargeable battery may improve in stability and capacity retention properties.

According to one or more embodiments of the present disclosure, the first particle PTC1 may be shaped like a single particle. The first particle PTC1 may be denser and more durable than the second particle PTC2. Thus, the first particle PTC1 may be prevented or reduced from the occurrence of micro-crack therein. As a result, it may be possible to improve stability and capacity retention properties of a rechargeable battery according to the present disclosure.

To form the first lithium composite oxide, the first particle PTC1 shaped like a single particle may undergo a firing process at a temperature of less than about 1,000 °C. In this case, an amount of residual lithium may be increased on the surface of the first particle PTC1, and thus there may be a reduction in ion conductivity on the surface of the first particle PTC1. Accordingly, power and capacity properties of a rechargeable battery may be reduced to some extent.

As discussed above, the second particle PTC2 may be shaped like a secondary particle. In this case, a micro-crack may be formed in a secondary particle if (e.g., when) a battery is charged and discharged, and a side reaction may be accelerated between the electrolyte (see 300 of FIG. 1) and the positive electrode active material CAM, which may result in the occurrence of gas in the battery. Hence, a rechargeable battery may decrease in stability and lifetime.

According to one or more embodiments of the present disclosure, the first particle PTC1 includes yttrium (Y) on the surface thereof. In the present disclosure, a position of transition metal in a positive electrode active material may be doped with yttrium (Y), and the yttrium (Y) may serve as a pillar to suppress or reduce a cation mixing phenomenon occurring between Li⁺ and Ni²⁺, with may result in an increase in lifetime of a rechargeable battery.

In one or more embodiments, the surface of the first particle PTC1 may be doped with yttrium (Y) having a large ionic radius, and therefore resistance within an electrode may be reduced to increase power of a rechargeable battery.

Moreover, according to one or more embodiments of the present disclosure, the first particle PTC1 includes zirconium (Zr) on the surface thereof. Thus, the first particle PTC1 may increase in ion conductivity on the surface thereof. In the present disclosure, even if (e.g., when) the first particle PTC1 is shaped like a single particle due to being fired at a low temperature, the zirconium-containing surface may cause an improvement in durability and capacity retention properties of a rechargeable battery. For example, as the first particle PTC1 includes zirconium (Zr) on the surface thereof, the surface may prevent or reduce a side reaction between the first particle PTC1 and the electrolyte 300. In this sense, the present disclosure may prevent or reduce the first particle PTC1 from degradation caused by the electrolyte 300. Furthermore, in the present disclosure, zirconium (Zr) may allow the first particle PTC1 to have a relatively large size (e.g., diameter) of crystal grains. Thus, the first particle PTC1 may have high durability and may be prevented or reduced from micro-crack therein.

The agglomerate ZAG may be provided in a space between the first and second particles PTC1 and PTC2. The agglomerate ZAG may be originated from a flux which will be discussed in more detail. The agglomerate ZAG may include at least one selected from among cobalt (Co), aluminium (Al), yttrium (Y), and zirconium (Zr). For example, the agglomerate ZAG may be a cluster formed by agglomeration of a portion of flux that is not coated on the surfaces of the first and second particles PTC1 and PTC2. FIG. 2 depicts the agglomerate ZAG, but in the present disclosure, it may not be necessary that the agglomerate ZAG is present.

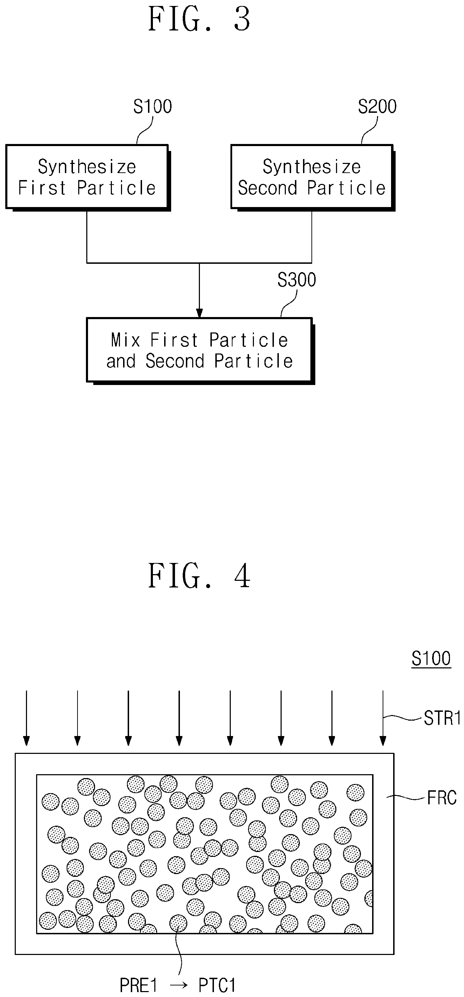

FIG. 3 illustrates a flow chart showing a method of fabricating a positive electrode active material according to one or more embodiments of the present disclosure. FIGS. 4 to 6 illustrate simplified diagrams showing a method of fabricating a positive electrode active material of FIG. 3.

Referring to FIGS. 3 and 4, a first particle PTC1 is synthesized (S100).

The following will describe in more detail a method of synthesizing the first particle PTC1. First, a first precursor PRE1 is prepared. The first precursor PRE1 may include nickel (Ni) and symbol Ma of Chemical Formula 1 discussed above. Symbol Ma may include at least one element selected from among Co, Al, Mn, Na, Mg, Ca, Y, Ti, Hf, V, Nb, Ta, Cr, Mo, W, Fe, Cu, Ag, Zn, B, Ga, C, Si, and Sn. For example, symbol Ma may include Co and Mn.

In one or more embodiments, the first precursor PRE1 may be obtained through a coprecipitation method. For example, the coprecipitation method may include dissolving a raw material of transition metal in a solvent such as distilled water, and continuously providing a reactor with a transition metal salt solution along with a chelating agent and an alkaline aqueous solution. A precipitate may be collected in (e.g., in the form of) a slurry, and then a slurry solution may be filtered and dried to obtain metal composite oxide or the first precursor PRE1.

In the present disclosure, the raw material of transition metal may include a metal salt of at least one element selected from among Ni, Co, Al, Mn, Na, Mg, Ca, Y, Ti, Hf, V, Nb, Ta, Cr, Mo, W, Fe, Cu, Ag, Zn, B, Ga, C, Si, and Sn. The metal salt may include sulfate, nitrate, acetate, halide, or hydroxide, and there is no particular limitation as long as a material can be dissolved in a solvent. The raw material of transition metal according to one or more embodiments may include one or more of nickel salts, cobalt salts, and aluminium salts. The raw material of transition metal may be mixed by adjusting a mole ratio to allow a positive electrode active material to have high capacity properties. For example, the mole ratio may determine the subscript "x1" of Chemical Formula 1.

The first precursor PRE1, a lithium raw material, and a flux may be mixed in a certain ratio to form a mixture. For example, the first precursor PRE1, the lithium raw material, and the flux may be mixed in a mole ratio of about 1.06:1:0.02. The lithium raw material may be utilized without particular limitation as long as it is utilized in fabrication of positive electrode active materials. For example, the lithium raw material may include a lithium salt, such as lithium carbonate, lithium nitrate, lithium hydroxide, or lithium sulfate.

When the flux is added and mixed, the flux and the lithium raw material may react to form an intermediate in a liquid state. In this case, while the intermediate reacts with the first precursor PRE1, a rearrangement may occur for reduction of surface tension. After the rearrangement, a solution reprecipitation may occur to reduce a pore within a lithium-transition metal composite oxide particle. For example, the reprecipitated lithium-transition metal composite oxide particle may experience densification to have a shape of a single particle. The flux may cause an easy formation of single particles, and thus a doping material may be formed on a surface of the single particle.

The flux includes yttrium (Y) and zirconium (Zr). For example, the flux may be Zr₍₁₋ₓ₎YₓO_{2-x/2} (0.01≤x≤0.30). A composition ratio (Y/Zr) of yttrium (Y) to zirconium (Nr) in the flux may range from about 0.5 to about 20.

In the present disclosure, the use of the flux may dope Zr and Y into a surface of the first particle PTC1 in a firing process which will be discussed in more detail. In one or more embodiments of the present disclosure, yttria-stabilized zirconia (YSZ) may be utilized as the flux. In the present disclosure, yttria-stabilized zirconia (YSZ) may be added at the time of firing, and thus the added yttria-stabilized zirconia (YSZ) may serve as a grain growth accelerator to accomplish a single-crystallization. For example, in the present disclosure, yttria-stabilized zirconia (YSZ) may act as an agglomeration inhibitor to acquire an increase in productivity caused by a reduction in firing temperature.

The mixture may be added to a furnace FRC and a first firing process STR1 may be performed at a first temperature. The first temperature may range from about 600 °C to about 1,000 °C. For example, the first temperature may range from about 650 °C to about 900 °C. The first firing process STR1 may be performed in an oxidizing atmosphere such as air or oxygen. In the first firing process STR1, a heat treatment time may range from about 10 hours to about 30 hours. In one or more embodiments of the present disclosure, before the first firing process STR1, a preliminary firing process may be additionally performed at a temperature of about 150 °C to about 800 °C.

In the first firing process STR1, the first particle PTC1 may be formed from the mixture including the first precursor PRE1, the lithium raw material, and the flux. In one or more embodiments of the present disclosure, a grinding process may be performed on the synthesized first particle PTC1. The ground first particle PTC1 may have a first average particle diameter APD1 discussed in FIG. 2. An average particle diameter of the first particle PTC1 may range from about 1 µm to about 5 µm.

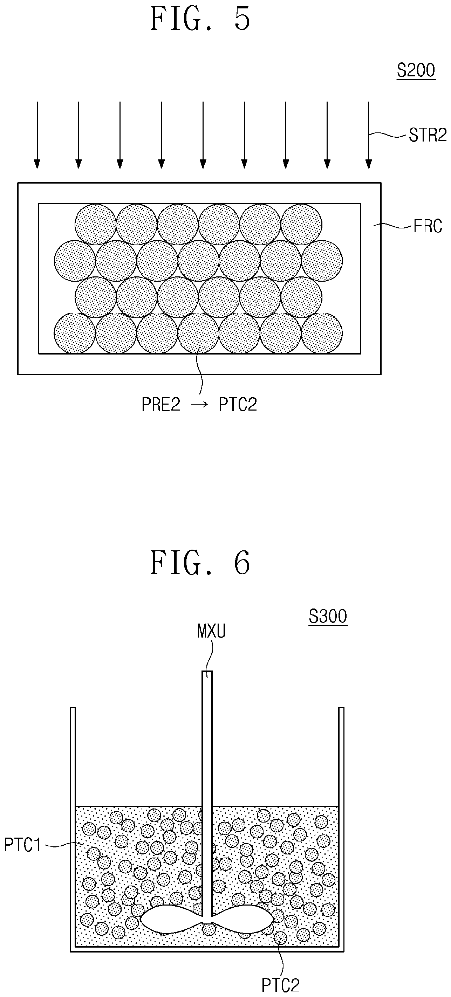

Referring to FIGS. 3 and 5, a second particle PTC2 is synthesized (S200). The following will describe in more detail a method of synthesizing the second particle PTC2. In one or more embodiments, the second precursor PRE2 may be obtained by a method substantially the same as or similar to that of the first precursor PRE1. However, the second precursor PRE2 may be formed to have an average particle diameter greater than that of the first precursor PRE1.

First, the second precursor PRE2 may be prepared. The second precursor PRE2 may include nickel (Ni) and symbol Mb of Chemical Formula 2 discussed above. Symbol Mb may include at least one element selected from among Co, Al, Mn, Na, Mg, Ca, Y, Ti, Hf, V, Nb, Ta, Cr, Mo, W, Fe, Cu, Ag, Zn, B, Ga, C, Si, Zr, and Sn. For example, symbol Mb may include Co and Mn.

In one or more embodiments, the second precursor PRE2 may be obtained through a coprecipitation method. For example, the coprecipitation method may include dissolving a raw material of transition metal in a solvent such as distilled water, and continuously providing a reactor with a transition metal salt solution along with a chelating agent and an alkaline aqueous solution. A precipitate may be collected in (e.g., in the form of) a slurry, and then a slurry solution may be filtered and dried to obtain metal composite oxide or the second precursor PRE2.

In the present disclosure, the raw material of transition metal may include a metal salt of at least one element selected from among Ni, Co, Al, Mn, Na, Mg, Ca, Y, Ti, Hf, V, Nb, Ta, Cr, Mo, W, Fe, Cu, Ag, Zn, B, Ga, C, Si, and Sn. The metal salt may include sulfate, nitrate, acetate, halide, or hydroxide, and there is no particular limitation as long as a material can be dissolved in a solvent. The raw material of transition metal according to one or more embodiments may include one or more of nickel salts, cobalt salts, and aluminium salts. The raw material of transition metal may be mixed by adjusting a mole ratio to allow a positive electrode active material to have high capacity properties. For example, the mole ratio may determine the subscript "x2" of Chemical Formula 2.

The second precursor PRE2 and a lithium raw material may be mixed in a certain ratio to form a mixture. For example, the second precursor PRE2 and the lithium raw material may be mixed in a mole ratio of about 1:1. The lithium raw material may be utilized without particular limitation as long as it is utilized in the fabrication of positive electrode active materials. For example, the lithium raw material may include a lithium salt, such as lithium carbonate, lithium nitrate, lithium hydroxide, or lithium sulfate.

The mixture may be added to a furnace FRC and a second firing process STR2 may be performed at a second temperature. The second temperature may range from about 700 °C to about 1,000 °C. For example, the second temperature may range from about 700 °C to about 800 °C. The second temperature may be less than the first temperature. In the second firing process STR2, a heat treatment time may range from about 10 hours to about 30 hours.

In the second firing process STR2, the second particle PTC2 may be formed from the mixture including the second precursor PRE2 and the lithium raw material. In one or more embodiments of disclosure, a grinding process may be performed on the synthesized second particle PTC2. The ground second particle PTC2 may have a second average particle diameter APD2 discussed in FIG. 2. The second particle PTC2 may have an average particle diameter of about 10 µm to about 25 µm.

A detailed description of the second firing process STR2 may be the same as or similar to that of the first firing process STR1.

Referring to FIGS. 3 and 6, the first particle PTC1 and the second particle PTC2 are mixed with each other (S300). In one or more embodiments, the first particle PTC1 and the second particle PTC2 may be mixed in a weight ratio of about 95:5 to about 50:50. In one or more embodiments, the first particle PTC1 and the second particle PTC2 may be mixed in a weight ratio of about 5:95 to about 50:50. As the first particle PTC1 is mixed with the second particle PTC2 whose average particle diameter is different from that of the first particle PTC1, there may be prepared a positive electrode active material having a bimodal shape. The mixed first and second particles PTC1 and PTC2 may be cleaned and dried.

Additionally, a coating process may further be performed on the first and second particles PTC1 and PTC2. The coating process may include coating surfaces of the first and second particles PTC1 and PTC2 with at least one selected from among cobalt and aluminium.

For example, the first and second particles PTC1 and PTC2 may be mixed with a coating raw material. The coating raw material may be a cobalt compound, an aluminium compound, and/or a mixture thereof (e.g., a suitable mixture thereof). For example, the cobalt compound may include cobalt sulfate, but the present disclosure is not limited thereto.

The first and second particles PTC1 and PTC2 and the coating raw material may be added and mixed in a solvent (e.g., distilled water). The first and second particles PTC1 and PTC2 and the coating raw material may be uniformly (e.g., substantially uniformly) mixed in an agitator MXU. Afterwards, the first and second particles PTC1 and PTC2 may be filtered and dried, and then a surface treatment may be performed on the first and second particles PTC1 and PTC2. The surface treatment may include performing a heat treatment process in an oxidizing atmosphere such as air or oxygen. The surface treatment may be performed at a temperature of about 500 °C to about 800 °C.

In one or more embodiments of disclosure, the coating process may include a dry coating process. For example, the mixture of the first and second particles PTC1 and PTC2 and a coating raw material (e.g., cobalt hydroxide) may be added and agitated without a solvent in a dry coating apparatus. The surface treatment may be performed on an obtained dry mixture.

A third firing process may be performed in such a way that the mixture of the first and second particles PTC1 and PTC2 and the coating raw material are added and thermally treated at a third temperature. The third temperature may range from about 700 °C to about 1,000 °C. For example, the third temperature may range from about 650 °C to about 900 °C, for example, from about 650 °C to about 750 °C.

It may therefore be possible to fabricate a positive electrode active material CAM discussed with reference to FIG. 2 according to one or more embodiments of the present disclosure.

The positive electrode 100 of FIG. 1 may be manufactured by an ordinary method of fabricating a positive electrode, except for the use of the positive electrode active material CAM according to one or more embodiments of the present disclosure. For example, the positive electrode active material CAM, a binder, and a conductive material of the present disclosure may be dissolved or dispersed in a solvent to manufacture a mixture. The binder and the conductive material may be the same as those discussed above in the positive electrode active material layer AML1 of FIG. 1. The mixture may be coated on the first current collector COL1, and then may be dried and pressed to manufacture the positive electrode 100.

The solvent may be a material used in the art, for example, the solvent may include at least one selected from among dimethyl sulfoxide (DMSO), isopropyl alcohol, N-methyl pyrrolidone (NMP), acetone, water, and a (e.g., any suitable) combination thereof.

In one or more embodiments, the mixture may be casted on a certain supporter to manufacture a film or the positive electrode active material layer AML1. The positive electrode 100 may be manufactured by laminating the positive electrode active material layer AML1 on the first current collector COL1.

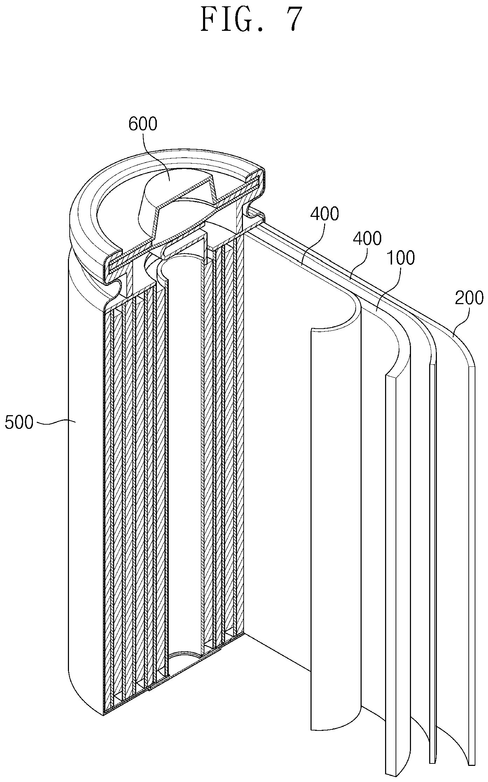

FIG. 7 illustrates a simplified cross-sectional view showing a rechargeable lithium battery according to one or more embodiments of the present disclosure. Referring to FIG. 7, a rechargeable lithium battery may include a positive electrode 100, a negative electrode 200, and a separator 400. A description of the positive electrode 100, the negative electrode 200, and the separator 400 may be substantially the same as that discussed above in the rechargeable lithium battery of FIG. 1.

The positive electrode 100, the negative electrode 200, and the separator 400 of FIG. 7 may be winded or folded to constitute an electrode assembly. The electrode assembly may be accommodated in a battery casing 500. The electrode assembly may include a plurality of electrode assemblies. The separator 400 may be provided between the electrode assemblies. The battery casing 500 may be provided therein with the electrode assemblies that are sequentially stacked. The battery casing 500 may be filled with an electrolyte (see 300 of FIG. 1). The battery casing 500 may be sealed by a cap assembly 600. The battery casing 500 according to one or more embodiments of the present disclosure may have a cylindrical shape, a prismatic shape, or a pouch shape. A rechargeable lithium battery according to one or more embodiments of the present disclosure may be utilized in an apparatus such as notebooks, smart phones, or electric vehicles.

Herein, the present disclosure will be described in more detail with reference to one or more embodiments. The following embodiments are provided for illustrative purpose only and are not to be construed to limit the scope of the present disclosure.

### Embodiment 1: Fabrication of Positive Electrode Active Material

### Preparation 1: Fabrication of Small-Particle Precursor

A coprecipitation method was utilized to manufacture a small-particle precursor. A subsequently described procedure was employed to manufacture nickel-based metal hydroxide (Ni_{0.94}Co_{0.05}Mn_{0.01}(OH)₂) as the small-particle precursor.

Nickel sulfate (NiO₄·6H₂O), cobalt sulfate (CoSO₄·7H₂O), manganese sulfate (MnSO₄·H₂O) in a mole ratio of about 90:7:3 as a raw material of nickel-based metal hydroxide were dissolved in distilled water as a solvent to prepare a metal raw material mixture solution. The metal raw material mixture solution, ammonia water, and sodium hydroxide were added and reacted in a reactor.

A slurry solution in the reactor was filtered and washed with high-purity distilled water. The washed material was dried in a hot-air oven at about 210 °C for about 24 hours to obtain powder of small-particle precursor (Ni_{0.94}Co_{0.05}Mn_{0.01}(OH)₂) whose particle size (e.g., diameter) is about 3 µm.

### Preparation 2: Fabrication of Small-Particle Lithium Composite Oxide

The small-particle precursor of Preparation 1, anhydrous lithium hydroxide (LiOH), and flux (YSZ) were dry-mixed with Henschel Mixer. Lithium, transition metal, and flux were mixed in a mole ratio of about 1.06:1:0.02. The transition metal refers to a total sum (Ni+Co+Mn) of transition metals contained in the small-particle precursor. A composition ratio (Y/Zr) of yttrium to zirconium of the flux is about 8.695.

The mixture was thermally heated (or a first firing process) in an oxygen atmosphere at about 800 °C for about 15 hours to synthesize first lithium composite oxide as a first particle. The first particle was grinded with Jet Mill under a pressure of about 3 bars.

### Preparation 3: Fabrication of Large-Particle Precursor

A coprecipitation method was utilized to manufacture a large-particle precursor. A subsequently described procedure was employed to manufacture nickel-based metal hydroxide (Ni_{0.94}Co_{0.05}Al_{0.01}(OH)₂) as the large-particle precursor.

Nickel sulfate (NiO₄·6H₂O), cobalt sulfate (CoSO₄·7H₂O), aluminium sulfate (Al₂(SO₄)₃·H₂O) in a mole ratio of about 90:7:3 as a raw material of nickel-based metal hydroxide were dissolved in distilled water as a solvent to prepare a metal raw material mixture solution. An ammonia water (NH₄OH) dilute solution and sodium hydroxide (NaOH) as a precipitant were prepared to form a complex compound. Afterwards, the metal raw material mixture solution, the ammonia water, and the sodium hydroxide were added to a reactor. Sodium hydroxide was added to the reactor to maintain pH of the mixture in the reactor. A reaction was performed for about 20 hours while the mixture was agitated in the reactor.

A slurry solution in the reactor was filtered and washed with high-purity distilled water. The washed material was dried in a hot-air oven at about 190 °C for about 24 hours to obtain powder of large-particle precursor (Ni_{0.94}Co_{0.05}Al_{0.01}(OH)₂) whose particle size (e.g., diameter) is about 18 µm.

### Preparation 4: Fabrication of Large-Particle Lithium Composite Oxide

The large-particle precursor of Preparation 3 and anhydrous lithium hydroxide (LiOH) were dry-mixed with Henschel Mixer. Lithium and transition metal were mixed in a mole ratio of about 1:1. The transition metal refers to a total sum (Ni+Co+Al) of transition metals contained in the large-particle precursor. The mixture was thermally heated (or a second firing process) in an oxygen atmosphere at about 750 °C for about 15 hours to synthesize a second lithium composite oxide or a second particle. The second particle was grinded with Jet Mill under a pressure of about 3 bars.

### Preparation 5: Fabrication of Bimodal Particles

The second particle (Preparation 4) whose average particle diameter was about 18 µm and the first particle (Preparation 2) whose average particle diameter was about 3 µm were mixed in a weight ratio of about 70:30 to prepare bimodal particles. The bimodal particles were added and washed with distilled water. Cobalt sulfate of about 20 mol% was added to sodium hydroxide to perform a wet cobalt coating.

After filtering and drying processes, a mixture (in which lithium hydroxide of about 5 mol% and zirconium dioxide (ZrO₂) of about 0.05 mol% were mixed) was thermally treated (or surface treatment) in an oxygen atmosphere at about 700 °C for about 15 hours to complete the cobalt coating. A positive electrode active material according to the present embodiment was therefore obtained.

### Preparation 6: Fabrication of Rechargeable Lithium Battery

The positive electrode active material of about 96 grams of Preparation 5, polyvinylidene fluoride of about 2 grams, N-methyl pyrrolidone of about 47 grams as a solvent, and carbon black of about 2 grams as a conductive material were mixed to manufacture active material slurry.

The active material slurry was coated on an aluminium film utilizing a doctor blade to form a thin electrode plate. The electrode plate was dried at about 135 °C for about 3 hours or more, and then compressed and vacuum dried to form a positive electrode.

The positive electrode and a lithium metal counter electrode were utilized to manufacture a 2032-type or kind coin cell. A separator (having a thickness of about 16 µm) formed of a porous polyethylene (PE) film was interposed between the positive electrode and the lithium metal counter electrode. An electrolyte was introduced to manufacture the 2032-type or kind coin cell. The electrolyte was a solution where LiPF₆ of about 1.1 M was dissolved in a solvent where ethylene carbonate (EC) and ethylmethyl carbonate (EMC) were mixed in a volume ratio of about 3:5.

### Comparative Example 1

A rechargeable lithium battery was fabricated by the same method as that of Embodiment 1, except that the flux (YSZ) was added and mixed in Preparation 4, and that zirconium dioxide (ZrO₂) is not added in Preparation 5.

### Comparative Example 2

A rechargeable lithium battery was fabricated by the same method as that of Embodiment 1, except that the flux (YSZ) was not utilized in Preparation 2.

### Comparative Example 3

A rechargeable lithium battery was fabricated by the same method as that of Embodiment 1, except that zirconium dioxide (ZrO₂) was not added in Preparation 5.

### Experimental Example 1: Analysis on Elements of Positive Electrode Active Material (SEM-EDS)

The positive electrode active material fabricated in Embodiment 1 was captured with a scanning transmission electron microscope (STEM) to perform energy dispersive X-ray spectroscopy (EDS). Thus, elements on a surface of the first particle (small particle) were analyzed, and elements on a surface of the second particle (large particle) were analyzed.

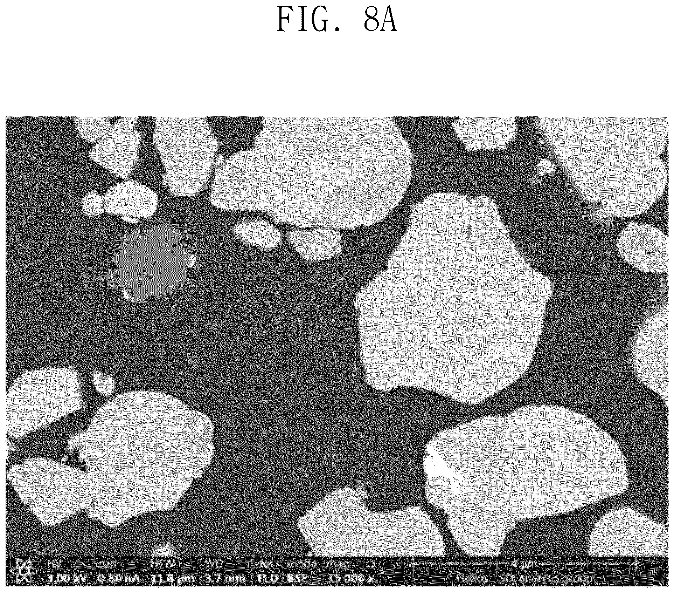

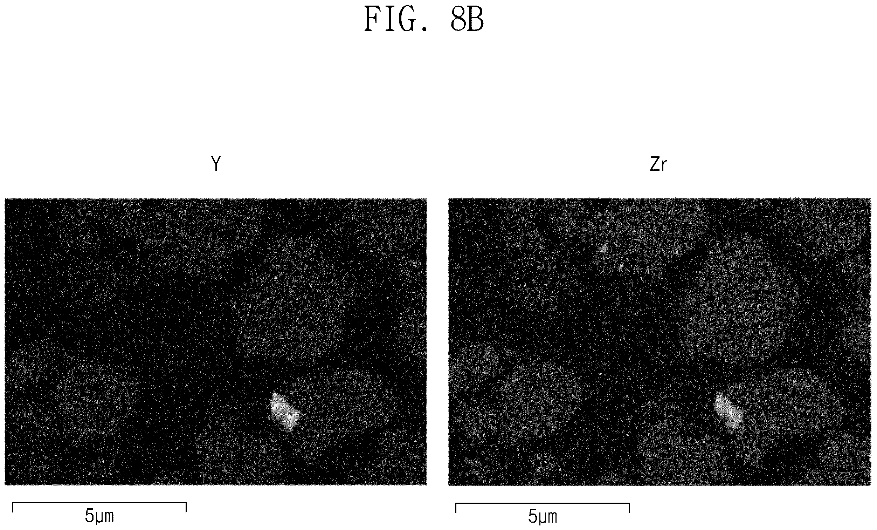

FIG. 8A depicts a SEM image capturing a surface of the first particle PTC1 of the positive electrode active material fabricated in Embodiment 1. FIG. 8B depicts an EDS result of measured components of the first particle PTC1.

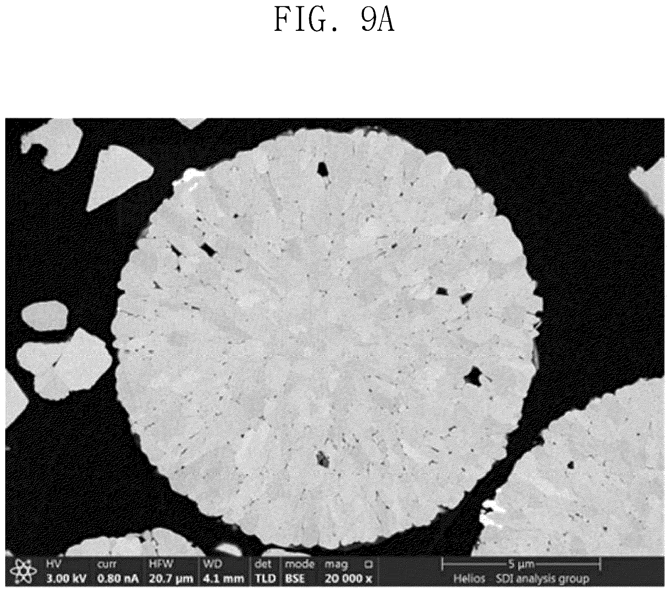

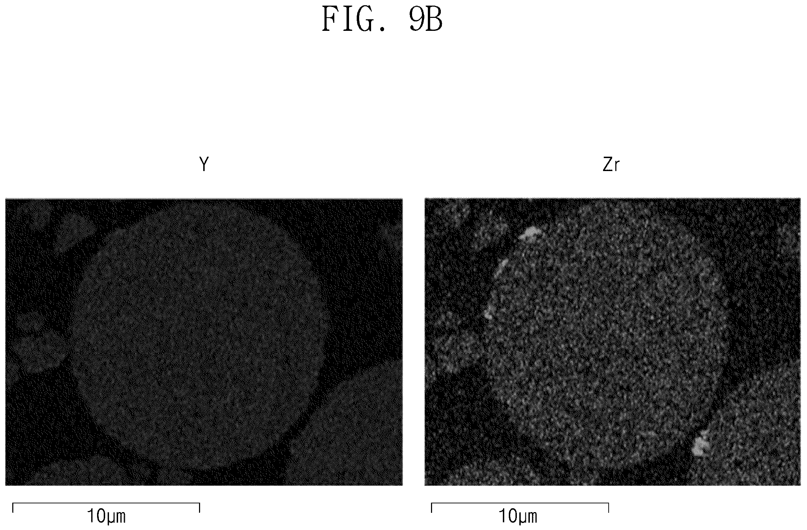

FIG. 9A depicts a SEM image capturing a surface of the second particle PTC2 of the positive electrode active material fabricated in Embodiment 1. FIG. 9B depicts an EDS result of measured components of the second particle PTC2.

Referring to FIGS. 8A and 8B, it was ascertained that zirconium (Zr) and yttrium (Y) were uniformly (e.g., substantially uniformly) doped on the surface of the first particle PTC1 or a small particle.

The term "surface" utilized in this description may refer to an outermost layer of a particle. Referring to FIGS. 8A and 8B, it was ascertained that zirconium (Zr) and yttrium (Y) were uniformly (e.g., substantially uniformly) doped on an outermost layer of the first particle PTC1.

Referring to FIGS. 9A and 9B, it was ascertained that a composition of yttrium (Y) is scarcely present in the second particle PTC2 or a large particle.

In this sense, it was ascertained that yttrium (Y) is uniformly (e.g., substantially uniformly) doped on a surface of the small particle, and an extremely small amount of yttrium (Y) is doped on a surface of the large particle.

### Experimental Example 2: Lifetime of Rechargeable Lithium Battery

A charge/discharge test system (Manufacturer: TOYO, Model: TOYO-3100) was utilized to evaluate capacity retention properties of each of coin cells of Embodiment 1 and Comparative Examples 1 to 3.

Each of the coin cells was charged at about 45 °C with a constant current of about 1 C until a voltage reached about 4.3 V, and then was charged with a constant voltage until a current reached about 0.05 C. The completely charged cell was discharged to a constant current of about 1 C until a voltage reached about 3 V after a pause of about 10 minutes, and this cycle was repeated 150 times.

Table 1 lists capacity and retention properties of coin cells of Embodiments and coin cells of Comparative Examples. After each of the coin cells was initially charged and discharged, the coin cell was repeatedly charged and discharged 50 times at about 1 C at about 45°C to measure 50^{th} discharge capacity, and a ratio (%) of the 50^{th} discharge capacity to the initial discharge capacity was expressed as "high-temperature lifetime" listed in Table 1. For example, the "high-temperature lifetime" refers to a capacity retention ratio.

**[Table 1]**

| | Large Particle (PTC2) | | Small Particle (PTC1) | | CHC | | |
|---|---|---|---|---|---|---|---|
| Additive | ZrO₂ | YSZ | ZrO₂ | YSZ | Ch. (mAh/g) | Dch. (mAh/g) | High-Temperature Lifetime |
| Embodiment 1 | O | X | O | O | 245.2 | 217.2 | 96.3% |
| Comparative Example 1 | X | O | X | O | 241.3 | 214.0 | 94.2% |
| Comparative Example 2 | O | X | O | X | 246.7 | 218.3 | 95.3% |
| Comparative Example 3 | X | X | X | O | 246.8 | 218.9 | 93.0% |

Referring to FIG. 1, the coin cell of Embodiment was ascertained to have improved capacity retention properties compared to the coin cell of Comparative Examples. A composition of yttrium (Y) present on a surface of the small particle was much greater than a composition of yttrium (Y) present on a surface of the large particle, and thus it was ascertained that a rechargeable lithium battery improved in capacity retention properties.

To overcome a difference in electric conductivity between a polycrystalline large particle and a monocrystalline small particle, the present disclosure may suggest that a flux such as YSZ is applied only to the small particle so as to increase an electric conductivity of the monocrystalline small particle, with the result that a balance of electric conductivity between the large particle and the small particle may be induced to improve capacity retention properties of rechargeable lithium batteries.

In a positive electric active material for a rechargeable lithium battery according to the present disclosure, a first particle or small particle includes yttrium (Y) and zirconium (Zr). The first particle or small particle has a higher composition of yttrium (Y) than that of a second particle or large particle. Thus, the positive electrode active material of the present disclosure may have high ion conductivity. A rechargeable lithium battery including the positive electrode active material of the present disclosure may improve in power and capacity properties.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

In present disclosure, "not include a or any 'component'" "exclude a or any 'component'", "`component'-free", and/or the like refers to the "component" not being added, selected or utilized as a component in the composition/structure, but the "component" of less than a suitable amount may still be included due to other impurities and/or external factors.

Although one or more embodiments of the present disclosure have been discussed with reference to accompanying drawings, it will be understood that one or more suitable changes in form and details may be made therein without departing from the scope of the present disclosure. It therefore will be understood that one or more embodiments described above are just illustrative but not limitative in all aspects.

## Claims

1. A positive electrode active material comprising:
a first particle that comprises a first lithium composite oxide and has a first average particle diameter; and
a second particle that comprises a second lithium composite oxide and has a second average particle diameter greater than the first average particle diameter,
wherein the first particle comprises yttrium (Y) and zirconium (Zr) on a surface of the first particle,
wherein the yttrium (Y) on the surface of the first particle has a first composition,
wherein yttrium (Y) on a surface of the second particle has a second composition, and
wherein a ratio of the first composition to the second composition is greater than 100.

2. The positive electrode active material as claimed in claim 1, wherein the first lithium composite oxide is represented by Chemical Formula 1,
[Chemical Formula 1] Liₐ₁ Niₓ₁Ma₁₋ₓ₁Zr_{w1}Y_{c1}O_{b1}
wherein in Chemical Formula 1,
a1 is 0.5 to 1.5,
x1 is 0.6 to 0.99,
b1 is 1.8 to 2.2,
1-x1 is 0.01 to 0.4,
w1 is 0.0005 to 0.003,
c1 is 0.00002 to 0.0003 (0.00002≤c1≤0.0003), and
Ma comprises at least one element selected from among Co, Al, Mn, Na, Mg, Ca, Y, Ti, Hf, V, Nb, Ta, Cr, Mo, W, Fe, Cu, Ag, Zn, B, Ga, C, Si, and Sn.

3. The positive electrode active material of claim 1 or claim 2, wherein a composition ratio (Y/Zr) of the yttrium (Y) to the zirconium (Zr) in the first particle is about 0.5 to about 20.

4. The positive electrode active material of any one of claims 1 to 3, wherein the first particle is monocrystalline.

5. The positive electrode active material of any one of claims 1 to 4, wherein the first average particle diameter is about 1 µm to about 5 µm.

6. The positive electrode active material of any one of claims 1 to 5, wherein the second lithium composite oxide is represented by Chemical Formula 2,
[Chemical Formula 2] Liₐ₂Niₓ₂Mb₁₋x₂O_{b2}
wherein in Chemical Formula 2,
a2 is 0.5 to 1.5,
x2 is 0.6 to 0.99,
b2 is 1.8 to 2.2,
1-x2 is 0.01 to 0.4, and
Mb comprises at least one element selected from among Co, Al, Mn, Na, Mg, Ca, Y, Ti, Hf, V, Nb, Ta, Cr, Mo, W, Fe, Cu, Ag, Zn, B, Ga, C, Si, and Sn.

7. The positive electrode active material of any one of claims 1 to 6, wherein the second particle is substantially yttrium (Y) free on the surface of the second particle.

8. The positive electrode active material any one of claims 1 to 7, wherein the second particle is a secondary particle that comprises a plurality of primary particles.

9. The positive electrode active material of any one of claims 1 to 8, wherein:
(i) the second particle is polycrystalline; and/or
(ii) the second average particle diameter is about 10 µm to about 25 µm.

10. The positive electrode active material any one of claims 1 to 9, wherein the second particle and the first particle have a weight ratio of about 95:5 to about 50:50.

11. A method of fabricating a positive electrode active material, the method comprising:
synthesizing a first particle that comprises first lithium composite oxide and has a first average particle diameter;
synthesizing a second particle that comprises second lithium composite oxide and has a second average particle diameter greater than the first average particle diameter; and
mixing the first particle and the second particle with each other,
wherein the synthesizing of the first particle comprises:
preparing a precursor of the first particle; and
firing the precursor together with a flux, and
wherein the flux comprises yttrium (Y) and zirconium (Zr).

12. The method as claimed in claim 11, wherein a composition ratio (Y/Zr) of the yttrium (Y) to the zirconium (Zr) in the flux is about 0.5 to about 20.

13. The method of claim 11 or claim 12, wherein the synthesizing of the first particle is performed at about 650 °C to about 900 °C for about 10 hours to about 30 hours.

14. The method of any one of claims 11 to 13, wherein
the first average particle diameter is about 1 µm to about 5 µm, and
the second average particle diameter is about 10 µm to about 25 µm.

15. A rechargeable lithium battery comprising:
a positive electrode comprising the positive electrode active material of any one of claims 1 to 10.
